(19) Europäisches Patentamt
European Patent Office
Office européen des brevets

(11) EP 3 706 999 B1

(12) **EUROPEAN PATENT SPECIFICATION**

(45) Date of publication and mention of the grant of the patent:
**07.07.2021 Bulletin 2021/27**

(21) Application number: **18796024.0**

(22) Date of filing: **31.10.2018**

(51) Int Cl.:
***B32B 27/32*** *(2006.01)*

(86) International application number:
**PCT/EP2018/079794**

(87) International publication number:
**WO 2019/091841 (16.05.2019 Gazette 2019/20)**

(54) **HEAT-SHRINKABLE LABEL**

WÄRMESCHRUMPFBARES ETIKETT

ÉTIQUETTE THERMORÉTRÉCISSABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2017 EP 17200780**

(43) Date of publication of application:
**16.09.2020 Bulletin 2020/38**

(73) Proprietor: **Basell Poliolefine Italia S.r.l.**
**20121 Milano (IT)**

(72) Inventors:
- **MASSARI, Paola**
  **44122 Ferrara (IT)**
- **FELISATI, Andrea**
  **44122 Ferrara (IT)**
- **IZZI, Marco**
  **60325 Frankfurt/M. (DE)**
- **BASSI, Paolo**
  **44122 Ferrara (IT)**
- **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 602 102**
**EP-A2- 0 374 783**
**WO-A1-2013/030314**
**WO-A1-2016/102779**
**JP-A- S57 129 746**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 706 999 B1

## Description

### Field of the invention

The present disclosure relates to a heat-shrinkable label comprising a propylene/ethylene/1-hexene terpolymer film.

### Background of the invention

Propylene/ethylene/1-hexene terpolymers are already known in the art for the production of films.
EP 483 523 relates to a composition of crystalline polymers of propylene comprising (weight percentage):

A) 30-65%, preferably 35-65%, more preferably 45-65%, of a copolymer of propylene with a $C_4$-$C_8$ alpha olefin containing from 98 to 80%, preferably from 95 to 85%, of propylene;
B) 35-70%, preferably 35-65%, more preferably 35-55%, of a copolymer of propylene with ethylene, and optionally from 2 to 10%, preferably from 3 to 6%, of a $C_4$-$C_8$ alpha-olefin, said copolymer containing 2 to 10% ethylene, preferably from 7 to 9% when the $C_4$-$C_8$ alpha-olefin is not present, and 0.5 to 5%, preferably from 1 to 3% ethylene, when the $C_4$-$C_8$ alpha-olefin is present.

The $C_4$-$C_8$ alpha-olefin is preferably selected from 1-butene; 1-pentene; 1-hexene; 4-methyl-1-pentene; and 1-octene. Particularly preferred is 1-butene.
US 6,365,682 relates to propylene based terpolymers to be used for films. The ethylene content ranges generally from 1 to 10 wt% and the alpha olefin ranges from 5 to 25wt%. For the preparation of films terpolymers having an ethylene content ranging from 0.9 to 3 wt% and an alpha olefin content ranging from 1 to 15wt% is indicated. Only terpolymers of propylene, ethylene and 1-butene are exemplified.
Heat-shrinkable films shrink or contract when exposed to elevated temperatures. This allows the films to be used to enclose or shrink around a product to produce a close film wrapping that conforms to the contours of the product.
EP 0374783 relates to a biaxially stretched, heat shrinkable film comprising a terpolymer of monomers (a), (b) and (c), wherein monomer (a) comprises ethylene, monomer (b) comprises a $C_6$-$C_8$ alpha-olefin, and monomer (c) comprises 1-butene or 1-hexene, wherein said terpolymer has a density less than 0.915 g/cm.
WO 2009/019169 relates to propylene ethylene 1-butene terpolymers suitable to be used as films having good optical properties and good shrinkage properties.
WO 2016/102779 relates to a shrink film including a first skin layer and a second skin layer comprising propylene terpolymer(s) between 1 and 99 wt%, and a core layer comprising random copolymer(s) of propylene or propylene terpolymer(s), and a modifier, which is at least one of the following: olefinic plastomer, olefinic elastomer and ethylene-octene block copolymer.

### Summary of the invention

The applicant has now found that by using a particular terpolymer it is possible to obtain heat-shrinkable label having improved shrinkage.
Thus, an object of the present disclosure is a heat-shrinkable label comprising a terpolymer film containing propylene, ethylene and 1-hexene, wherein the terpolymer has:

(i) a content of ethylene derived units ranging from 0.5 wt% to 5.0 wt%,
(ii) a content of 1-hexene derived units ranging from 1.0 wt% to 6.0 wt,
(iii) a melt flow rate (MFR) (ISO 1133 230°C, 2.16 kg) ranging from 0.5 to 20 g/10 min, and
(iv) a polydispersity index (P.I.) ranging from 2.0 to 7.0.

### Detailed description of the invention

The term "shrinkable layer" includes both shrink sleeve labels and roll-fed shrink labels.
The terpolymer contains only propylene, ethylene and 1-hexene, the sum of these three comonomers derived units content being 100.
The film can be a cast film.
The film can be a monolayer or a multilayer polymer film.
If necessary, the molecular weight of the terpolymer can be modified by visbreaking according to well-known techniques.

Preferably, the content of ethylene derived units ranges from 1.0 wt% to 3.0 wt%; more preferably from 1.2 wt% to 2.5 wt%.

Preferably, the content of 1-hexene derived units ranges from 2.0 wt% to 5.0 wt%; more preferably from 2.5 wt% to 4.0 wt%.

Preferably, the melt flow rate ranges from 1 to 10 g/10 min, more preferably from 3 to 8 g/10min.

Preferably, the polydispersity index (P.I.) ranges from 3.0 to 6.5, more preferably from 3.5 to 6.0.

Preferably, the area of the DSC curve after the peak of the melting point (Tm) represents more than 22%; preferably more than 25%, more preferably more than 28% of the total area of the DSC curve.

The melting temperature (melting point, Tm), crystallization temperature (Tc) and partial area percentage are determined by differential scanning calorimetry (DSC) by using the following method:

A sample weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read. For partial area calculation the same melting peak considered for Tm calculation is used. A baseline to the peak is built by joining the peak initiation and end temperatures at which the endothermic peak begins and ends to deviate from the relatively straight baseline. Partial area is calculated by taking as starting point the Tm temperature and as end point the peak end temperature. Results are expressed in percentage of total area.

Preferably the terpolymer of the present disclosure is further endowed with:

(v) the area of the DSC curve between the peak of the melting point and Tm+5°C is lower than 19%; preferably lower than 15%; more preferably lower than 13% of the total area of the DSC curve.

Preferably the amount (wt%) of 1-hexene (C6), the amount (wt%) of ethylene (C2) and the melting point (Tm) of the terpolymer fulfil the following relation (I)

$$Tm > 157-(C2+0.8C6)*6 \qquad (I)$$

Preferably relation (I) is Tm>158-(C2+0.8C6)*6; more preferably Tm>159-(C2+0.8C6)*6;

The terpolymer of the present invention preferably exhibits a seal initiation temperature (SIT) comprised between 90°C and 120°C, more preferably between 100°C and 115°C; even more preferably between 102°C and 113°C.

The crystallization temperature preferably ranges from 70°C to 100°C, preferably from 80°C to 95°C; more preferably from 85°C to 95°C.

In order to achieve the MFR of the terpolymer of the present invention it is also possible to visbreak a polymer having a lower MFR. In order to visbreak the polymer known visbreaking agent can be used such as peroxides. With the visbreaking it is possible to fine tune the MFR of the product.

The terpolymers of the present disclosure have a xylene extractables content that is lower than 15 wt%.

Without to be bound by a theory it is believed that the fact that the area of the DSC curve after the melting point peak is relatively larger reflect the presence of high melting point terpolymer fractions. Therefore, by using the polymerization process described below it is possible to obtain a terpolymer that is multimodalized in composition, i.e. the resulting terpolymer contains various fractions having a low content of comonomers, said fractions being responsible of the high melting point and said terpolymer contains fractions having a quite high comonomer content, said fractions being responsible of the low SIT. This is also confirmed by the fact that even at high comonomers content the terpolymers of the present disclosure show a high melting point.

The high melting point fractions allow the terpolymer to be easily processed especially in the production of films. At the same time, the low SIT allows the terpolymer to be used easily in various materials such as multilayer films.

The terpolymer can be prepared by polymerisation in one or more polymerisation steps. Such polymerisation can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the disclosure are capable of producing polypropylene with a value of xylene insolubility at ambient temperature greater than 90%, preferably greater than 95%.

Catalysts having the above-mentioned characteristics are well known in the patent literature; particularly advantageous are the catalysts described in US patent 4,399,054 and EP patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters

of mono- and dicarboxylic acids.

Particularly suitable electron-donor compounds are esters of phtalic acid and 1,3-diethers of formula:

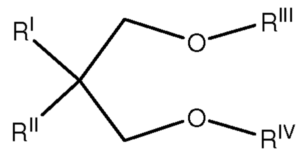

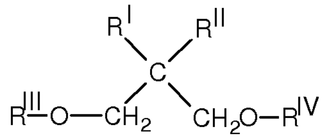

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above-mentioned catalyst component is carried out according to various methods.

For example, a $MgCl_2 \cdot nROH$ adduct (in particular in the form of spheroidal particles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si($OCH_3$)$_2$, (cyclohexyl)(methyl)Si ($OCH_3$)$_2$, (cyclopentyl)$_2$Si($OCH_3$)$_2$ and (phenyl)$_2$Si($OCH_3$)$_2$ and (1,1,2-trimethylpropyl)Si($OCH_3$)$_3$.

1,3-diethers having the formulae described above can also be used advantageously. If the internal donor is one of these diethers, the external donors can be omitted.

In particular, even if many other combinations of the previously said catalyst components may allow to obtain propylene polymer compositions according to the present disclosure, the terpolymers are preferably prepared by using

catalysts containing a phthalate as internal donor and $(cyclopentyl)_2Si(OCH_3)_2$ as outside donor, or the said 1,3-diethers as internal donors.

The said propylene-ethylene-hexene-1 polymers are produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be affected by means of a recycle line for the gaseous mixture.

The control of the polymer circulating between the two polymerisation zones can be affected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state; therefore, catalysts in either solid or liquid state can be used.

The terpolymer of the present disclosure may be blended with additives commonly employed in the art, such as antioxidants, light stabilizers, heat stabilizers, nucleating agents, colorants and fillers.

The following examples are given to illustrate the present disclosure without limiting purpose.

**Examples**

**Characterization methods**

Melting temperature, crystallization temperature and partial area percentage determination:

Determined by differential scanning calorimetry (DSC). A sample weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

For partial area calculation the same melting peak considered for Tm calculation is used.

A baseline to the peak is built by joining the peak initiation and end temperatures at which the endothermic peak begins and ends to deviate from the relatively straight baseline. Partial area is calculated by taking as starting point the Tm temperature and as end point the peak end temperature.

Results are expressed in percentage of total area.

Melt Flow Rate: Determined according to the method ISO 1133 (230° C, 2.16 kg).

Solubility in xylene: Determined as follows.

2.5 g of polymer and 250 ml of xylene are introduced in a glass flask equipped with a refrigerator and a magnetical stirrer. The temperature is raised in 30 minutes at 135°C. The so obtained clear solution is then kept under reflux and stirring for further 30 minutes. The closed flask is kept in thermostatic water bath at 25° C for 30 minutes. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 70° C under vacuum until constant weight is obtained. The weight percentage of polymer soluble in xylene at room temperature is then calculated.

1-hexene and ethylene content: Determined by $^{13}C$-NMR spectroscopy in terpolymers:

$^{13}C$ NMR spectra are acquired on an AV-600 spectrometer operating at 150.91 MHz in the Fourier transform mode at 120 °C. The peak of the propylene CH was used as internal reference at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program (1) | ZGPG |
| Pulse Length (PI) (2)\ | for 90° |
| Total number of points (TD) | 32K |
| Relaxation Delay (2) | 15 s |
| Number of transients (3) | 1500 |

The total amount of 1-hexene and ethylene as molar percent is calculated from diad using the following relations:

$$[P] = PP + 0.5PH + 0.5PE$$

$$[H] = HH + 0.5PH$$

$$[E] = EE+ 0.5PE$$

Assignments of the $^{13}C$ NMR spectrum of propylene/1-hexene/ethylene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}$+ $S_{\alpha\delta}$ | PE |
| 5 | 35.70 -35.0 | $4B_4$ | H |
| 6 | 35.00 - 34.53 | $S_{\alpha\gamma}$+ $S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma y}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |

(continued)

| Area | Chemical Shift | Assignments | Sequence |
|---|---|---|---|
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

Polydispersity Index (P.I.):

Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I.= 105/Gc$$

in which Gc is the crossover modulus which is defined as the value (expressed in Pa) at which G'=G" wherein G' is the storage modulus and G" is the loss modulus.

Seal Initiation Temperature (SIT)

- Preparation of the film specimens

Some films with a thickness of 50 μm are prepared by extruding each test composition in a single screw Collin extruder (length/diameter ratio of screw 1:25) at a film drawing speed of 7 m/min and a melt temperature do 210-250 °C. Each resulting film is superimposed on a 1000 μm thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a TOM Long film stretcher at 150°C, thus obtaining a 20 μm thick film (18 μm homopolymer+2 μm test). 2x5 cm specimens are cut from the films.

- Determination of the SIT

For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 5 seconds at a pressure of 0.1 $N/mm^2$. The sealing temperature is increased of 2°C for each seal, starting from about 10 °C less than the melting temperature of the test composition. The sealed samples are left to cool and then their unsealed ends are attached to an Instron machine where they are tested at a traction speed of 50 mm/min.
The SIT is the minimum sealing temperature at which the seal does not break when a load of at least 2 Newtons is applied in the said test conditions.

Shrinkage

- Preparation of the film specimens

Some films with a thickness of 200 μm have been prepared by extruding each test composition in a single screw Leonard extruder (length/diameter ratio of screw 1:27) at a film drawing speed of 4 m/min and a melt temperature of 230-250 °C.

- Stretching of the films

The films are stretched in MD with Karo 4 Brueckner stretching line (stretching ratio 5:1) at speed 600 %sec after preheating time of 30 sec at temperature 115°C

- Shrinkage measurement

Label shrinkage has been determined by placing 100 x 20 mm label sample in an oven with circulating air. Each label sample was carved out from the corresponding film prepared as described above.

Oven residence time was 180 s (+/-5 s) at different air temperature (100 or 110 °C). Calculation of the final film shrinkage has been determined by the following relation:

$$\text{Film shrinkage} = (Li-Lf)/Li*100$$

being
Li = initial film dimension (100 mm)
Lf = film dimension after the oven treatment
Measurements were done when film reached the room temperature (approx. 15-20 m after being extracted from the oven).

Example 1

A copolymer is prepared by polymerising propylene, ethylene and hexene-1 in the presence of a catalyst under continuous conditions in a plant comprising a polymerisation apparatus as described in EP 1 012 195.

The catalyst is sent to the polymerisation apparatus that comprises two interconnected cylindrical reactors, riser and downcomer. Fast fluidisation conditions are established in the riser by recycling gas from the gas-solid separator. In examples 1 the gas composition in the two reactor legs has been differentiated by using the "barrier" feed according to what described in EP 1 012 195. This stream is propylene fed in the larger upper part of the downcomer. In comparative example 2 the barrier feed has not been used.

The catalyst employed comprises a catalyst component prepared by analogy with example 5 of EP-A-728 769 but using microspheroidal $MgCl_2 \cdot 1.7C_2H_5OH$ instead of $MgCl_2 \cdot 2.1C_2H_5OH$. Such catalyst component is used with dicyclopentyl dimethoxy silane (DCPMS) as external donor and with triethylaluminium (TEA).

The polymer particles exiting the reactor are subjected to a steam treatment to remove the reactive monomers and volatile substances and then dried. The main operative conditions are indicated in Table 1.

Table 1

| Examples | | 1 |
|---|---|---|
| TEA/solid catalyst component, g/g | | 10 |
| TEA/DCPMS, g/g | | 4 |
| C6/(C3+C6), mol/mol | Riser | 0.039 |
| C6/(C3+C6), mol/mol | Downcomer | 0.084 |
| C2/(C3+C2), mol/mol | Riser | 0.02 |
| C2/(C3+C2), mol/mol | Downcomer | 0.006 |
| C2: ethylene; C3: propylene; C6: 1-hexene | | |

Comparative Example 2

Comparative Example 2 is a propylene-ethylene-1-butene terpolymer prepared according to Example 1 of WO 2009/019169. The ethylene derived units content is 3.7 wt%, while the 1-butene derived units content is 6.4 wt% with respect to the terpolymer.

To the terpolymers obtained according to Example 1 and Comparative Example 2 the following additives have been added (Table 2).

Table 2

| | | Example 1 | Comparative Example 2 |
|---|---|---|---|
| Terpolymer | wt% | 99.68 | 99.70 |
| Silica | wt% | 0.10 | 0.10 |
| Antioxidants | wt% | 0.15 | 0.15 |
| Calcium stearate | wt% | 0.05 | 0.05 |
| Luperox 101 | Wt% | 0.02 | no |

In Table 3 the properties of Example 1 and Comparative Example 2 are reported.

Table 3

| Example | | Example 1 | Comparative Example 2 |
|---|---|---|---|
| MFR | g/10 min | 6.2 | 5.5 |
| C6 NMR | % | 3.4 | 0 |
| C2 NMR | % | 1.9 | 3.7 |
| C4 NMR | % | 0 | 6.4 |
| P.I. | | 4.2 | |
| XS | % | 12 | |
| Tm | °C | 134.5 | 131.7 |
| Tc | °C | 88.3 | 79.3 |
| Label shrinkage at 100 °C | % | 8 | 5 |
| Label shrinkage at 100 °C | % | 13 | 11 |
| Area of the DSC after the melting point (Tm) | % | 28 | 31.5 |
| Area of the DSC between the melting point (Tm) and Tm+5°C | % | 12 | 9.5 |
| SIT | °C | 105 | 105 |
| C2: ethylene; C6: 1-hexene; C4: 1-butene; XS: xylene solubles | | | |

## Claims

1. A heat-shrinkable label comprising a film comprising a terpolymer containing propylene, ethylene and 1-hexene, wherein the terpolymer has:

   (i) a content of ethylene derived units ranging from 0.5 wt% to 5.0 wt%,
   (ii) a content of 1-hexene derived units ranging from 1.0 wt% to 6.0 wt%,
   (iii) a melt flow rate (MFR) (ISO 1133 230°C, 2.16 kg) ranging from 0.5 to 20 g/10 min, and
   (iv) a polydispersity index (P.I.) ranging from 2.0 to 7.0.

2. Heat-shrinkable label according to claim 1, weherein the area of the DSC curve of the terpolymer after the peak of the melting point (Tm) represents more than 22% of the total area of the DSC curve, preferably more than 28%.

3. Heat-shrinkable label according to claim 1 or 2, wherein the area of the DSC curve between the peak of the melting point (Tm) and Tm+5 °C is lower than 19% of the total area of the DSC curve.

4. Heat-shrinkable label according to any of claims 1-3, wherein the amount (wt%) of 1-hexene (C6), the amount (wt%) of ethylene (C2) and the melting point (Tm) of the terpolymer fullfill the following relation (I)

$$Tm > 157-(C2+0.8C6)*6 \qquad (I)$$

5. Heat-shrinkable label according to any of claims 1-4, wherein the content of ethylene derived units of the terpolymer ranges from 1.0 wt% to 3.0 wt%; preferably from 1.2 wt% to 2.5 wt%.

6. Heat-shrinkable label according to any of claims 1-5 wherein the content of 1-hexene derived units of the terpolymer ranges from 2.0 wt% to 5.0 wt%; preferably from 2.5 wt% to 4.0 wt.

7. Heat-shrinkable label according to any of claims 1-6 wherein the melt flow rate (MFR) (ISO 1133 230°C, 2.16 kg) of the terpolymer ranges from 1 to 10 g/10 min, more preferably from 3 to 8 g/10min.

8. Heat-shrinkable label according to any of claims 1-7 wherein the polydispersity index (P.I.) of the terpolymer ranges from 3.0 to 6.5, preferably from 3.5 to 6.0.

9. Heat-shrinkable label according to any of claims 1-8, wherein the terpolymer have a xylene extractable content lower than 15 wt.%.

10. Use of a shrinkable label according to any of claims 1-9 for labelling of an item.

**Patentansprüche**

1. Wärmeschrumpfbares Etikett, umfassend einen Film, der ein Terpolymer umfasst, welches Propylen, Ethylen und 1-Hexen enthält, wobei das Terpolymer aufweist:

   (i) einen Gehalt an von Ethylen abgeleiteten Einheiten im Bereich von 0,5 Gew.% bis 5,0 Gew.%,
   (ii) einen Gehalt an von 1-Hexen abgeleiteten Einheiten im Bereich von 1,0 Gew.% bis 6,0 Gew.%,
   (iii) eine Schmelzflussrate (MFR) (ISO 1133, 230 °C, 2,16 kg) im Bereich von 0,5 bis 20 g/10 min, und
   (iv) einen Polydispersitätsindex (P.I.) im Bereich von 2,0 bis 7,0.

2. Wärmeschrumpfbares Etikett nach Anspruch 1, wobei die Fläche der DSC-Kurve des Terpolymers nach dem Peak des Schmelzpunkts (Tm) mehr als 22 % der Gesamtfläche der DSC-Kurve repräsentiert, vorzugsweise mehr als 28 %.

3. Wärmeschrumpfbares Etikett nach Anspruch 1 oder 2, wobei die Fläche der DSC-Kurve zwischen dem Peak des Schmelzpunkts (Tm) und Tm + 5 °C kleiner als 19 % der Gesamtfläche der DSC-Kurve ist.

4. Wärmeschrumpfbares Etikett nach einem der Ansprüche 1 bis 3, wobei die Menge (Gew.%) an 1-Hexen (C6), die Menge (Gew.%) an Ethylen (C2) und der Schmelzpunkt (Tm) des Terpolymers die folgende Beziehung (I) erfüllen:

$$Tm > 157 - (C2 + 0,8\ C6) * 6 \qquad (I)$$

5. Wärmeschrumpfbares Etikett nach einem der Ansprüche 1 bis 4, wobei der Gehalt an von Ethylen abgeleiteten Einheiten des Terpolymers im Bereich von 1,0 Gew.% bis 3,0 Gew.%, vorzugsweise 1,2 Gew.% bis 2,5 Gew.% liegt.

6. Wärmeschrumpfbares Etikett nach einem der Ansprüche 1 bis 5, wobei der Gehalt an von 1-Hexen abgeleiteten Einheiten des Terpolymers im Bereich von 2,0 Gew.% bis 5,0 Gew.%, vorzugsweise 2,5 Gew.% bis 4,0 Gew.% liegt.

7. Wärmeschrumpfbares Etikett nach einem der Ansprüche 1 bis 6, wobei die Schmelzflussrate (MFR) (ISO 1133, 230 °C, 2,16 kg) des Terpolymers im Bereich von 1 bis 10 g/10 min, bevorzugter 3 bis 8 g/10 min liegt.

8. Wärmeschrumpfbares Etikett nach einem der Ansprüche 1 bis 7, wobei der Polydispersitätsindex (P.I.) des Terpolymers im Bereich von 3,0 bis 6,5, vorzugsweise 3,5 bis 6,0 liegt.

9. Wärmeschrumpfbares Etikett nach einem der Ansprüche 1 bis 8, wobei das Terpolymer einen Gehalt an xylolextrahierbarem Material von weniger als 15 Gew.% aufweist.

**10.** Verwendung eines schrumpfbaren Etiketts nach einem der Ansprüche 1 bis 9 zum Etikettieren eines Gegenstands.

**Revendications**

**1.** Étiquette thermorétractable comprenant un film comprenant un terpolymère contenant du propylène, de l'éthylène et du 1-hexène, le terpolymère présentant :

(i) une teneur en motifs dérivés de l'éthylène se situant dans la plage de 0,5 % en poids à 5,0 % en poids,
(ii) une teneur en motifs dérivés du 1-hexène se situant dans la plage de 1,0 % en poids à 6,0 % en poids,
(iii) un indice de fluidité à chaud (MFR) (ISO 1133, 230°C, 2,16 kg) se situant dans la plage de 0,5 à 20 g/10 min et
(iv) un indice de polydispersité (IP) se situant dans la plage de 2,0 à 7,0.

**2.** Étiquette thermorétractable selon la revendication 1, la zone de la courbe de DSC (calorimétrie différentielle à balayage) du terpolymère après le pic du point de fusion (Tm) représentant plus de 22 % de la surface totale de la courbe de DSC, préférablement plus de 28 %.

**3.** Étiquette thermorétractable selon la revendication 1 ou 2, la zone de la courbe de DSC entre le pic du point de fusion (Tm) et Tm +5°C étant inférieure à 19 % de la surface totale de la courbe de DSC.

**4.** Étiquette thermorétractable selon l'une quelconque des revendications 1 à 3, la quantité (% en poids) de 1-hexène (C6), la quantité (% en poids) d'éthylène (C2) et le point de fusion (Tm) du terpolymère satisfaisant à la relation suivante (I)

$$Tm > 157-(C2+0,8C6)*6 \quad (I)$$

**5.** Étiquette thermorétractable selon l'une quelconque des revendications 1 à 4, la teneur en motifs dérivés de l'éthylène du terpolymère se situant dans la plage de 1,0 % en poids à 3,0 % en poids ; préférablement de 1,2 % en poids à 2,5 %.

**6.** Étiquette thermorétractable selon l'une quelconque des revendications 1 à 5, la teneur en motifs dérivés du 1-hexène du terpolymère se situant dans la plage de 2,0 % en poids à 5,0 % en poids ; préférablement de 2,5 % en poids à 4,0 %.

**7.** Étiquette thermorétractable selon l'une quelconque des revendications 1 à 6, l'indice de fluidité à chaud (MFR) (ISO 1133, 230°C, 2,16 kg) du terpolymère se situant dans la plage de 1 à 10 g/10 min, plus préférablement de 3 à 8 g/10 min.

**8.** Étiquette thermorétractable selon l'une quelconque des revendications 1 à 7, l'indice de polydispersité (IP) du terpolymère se situant dans la plage de 3,0 à 6,5, préférablement de 3,5 à 6,0.

**9.** Étiquette thermorétractable selon l'une quelconque des revendications 1 à 8, le terpolymère présentant une teneur extractible dans le xylène inférieure à 15 % en poids.

**10.** Utilisation d'une étiquette rétractable selon l'une quelconque des revendications 1 à 9 pour le marquage d'un article.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 483523 A
- US 6365682 B
- EP 0374783 A
- WO 2009019169 A
- WO 2016102779 A
- US 4399054 A
- EP 45977 A
- US 4472524 A
- EP 361493 A
- EP 728769 A
- EP 1012195 A